(19) Europäisches Patentamt
European Patent Office
Office européen des brevets

(11) **EP 1 768 830 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(51) Int Cl.:
***B29C 45/78*** *(2006.01)* ***B29C 45/76*** *(2006.01)*

(21) Anmeldenummer: **05756423.9**

(22) Anmeldetag: **13.07.2005**

(86) Internationale Anmeldenummer:
**PCT/CH2005/000401**

(87) Internationale Veröffentlichungsnummer:
**WO 2006/007749 (26.01.2006 Gazette 2006/04)**

(54) **TEMPERATURABHÄNGIGE ENTFORMUNG**

TEMPERATURE-DEPENDENT DEMOLDING

DEMOULAGE DEPENDANT DE LA TEMPERATURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.07.2004 CH 12372004**

(43) Veröffentlichungstag der Anmeldung:
**04.04.2007 Patentblatt 2007/14**

(73) Patentinhaber: **Kistler Holding AG**
**8408 Winterthur (CH)**

(72) Erfinder: **THIENEL, Paul**
**58644 Iserlohn (DE)**

(56) Entgegenhaltungen:
**US-A- 5 296 174     US-A- 5 411 686**

- **PATENT ABSTRACTS OF JAPAN Bd. 0121, Nr. 16 (M-684), 13. April 1988 (1988-04-13) & JP 62 242512 A (JAPAN STEEL WORKS LTD:THE), 23. Oktober 1987 (1987-10-23) -& DATABASE WPI Week 198748 Derwent Publications Ltd., London, GB; AN 1987-338090 XP002308170 & JP 62 242512 A 23. Oktober 1987 (1987-10-23)**
- **LUO R C ET AL: "Rapid resin mold with embedded thin film pressure/temperature sensors" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA, IEEE, US, 29. November 1999 (1999-11-29), Seiten 1301-1306, XP010366759 ISBN: 0-7803-5735-3**
- **VARELA A E ET AL: "A METHOD FOR ESTIMATING BULK MELT TEMPERATURE AND PART WEIGHT IN INJECTION MOLDING OF AMORPHOUS THERMOPLASTICS" ADVANCES IN POLYMER TECHNOLOGY, JOHN WILEY AND SONS, CHICHESTER, GB, Bd. 15, Nr. 1, 21. März 1996 (1996-03-21), Seiten 17-28, XP000548265 ISSN: 0730-6679**
- **PATENT ABSTRACTS OF JAPAN Bd. 0061, Nr. 42 (M-146), 31. Juli 1982 (1982-07-31) & JP 57 064533 A (SUMITOMO BAKELITE CO LTD), 19. April 1982 (1982-04-19)**
- **PATENT ABSTRACTS OF JAPAN Bd. 0160, Nr. 07 (M-1198), 9. Januar 1992 (1992-01-09) & JP 03 230929 A (JAPAN STEEL WORKS LTD:THE), 14. Oktober 1991 (1991-10-14) -& DATABASE WPI Week 199147 Derwent Publications Ltd., London, GB; AN 1991-344318 XP002308171 & JP 03 230929 A 14. Oktober 1991 (1991-10-14)**
- **"GANZ NAH" PLASTVERARBEITER, ZECHNER UND HUETHIG VERLAG GMBH. SPEYER/RHEIN, DE, Bd. 49, Nr. 11, November 1998 (1998-11), Seiten 29-30, XP000935436 ISSN: 0032-1338**
- **SORS L: "OPTIMUM TEMPERATURE FOR REMOVAL OF INJECTION MOULDINGS" INTERNATIONAL POLYMER SCIENCE AND TECHNOLOGY, RAPRA TECHNOLOGIES, SHROPSHIRE, GB, Bd. 22, Nr. 1, Januar 1995 (1995-01), Seiten T-78, XP000512441 ISSN: 0307-174X**

**Beschreibung**

**Technisches Gebiet**

Die Erfindung betrifft ein Verfahren und eine Steuerung zur Bestimmung eines Entformungszeitpunktes beim Spritzgiessen von amorphen und teilkristallinen Thermoplasten gemäss Oberbegriff des ersten Patentanspruchs.

**Stand der Technik**

Amorphe und teilkristalline Thermoplaste werden in vielen Anwendungen eingesetzt. Beispiele für Produkte aus solchen Materialien umfassen Formteile wie Gehäuse für viele Geräte wie Mobiltelefone oder Computer sowie allerlei Kunststoffgüter für Haushalt und Hobby.

Beim Spritzgiessverfahren werden flüssige Thermoplaste in ein hohles Werkzeug gebracht, deren Aussparung, auch Kavität genannt, die Form eines herzustellenden Teiles aufweist. Nachdem die Kavität gefüllt ist, folgt die Kühlperiode, die erforderlich ist, um das Teil formstabil auf die erforderliche Entformungstemperatur abzukühlen. Danach wird das Formwerkzeug geöffnet, das fertige Formteil entnommen und ein neuer Zyklus kann begonnen werden.

Das Formteil darf nicht zu früh seinem Formwerkzeug entnommen werden, da es sich sonst anschliessend verziehen kann. Weitere mögliche Nachteile einer zu frühen Entnahme umfassen ein mögliches ungünstiges Schwindungsverhalten, Formteilinstabilitäten sowie eine Qualitätsminderung der Oberflächengüte. Falls eine vorher bestimmte Toleranz der Masshaltigkeit, die mit einer Lehre gemessen werden kann, überschritten wird, muss das Formteil entsorgt werden. Dies bedeutet, dass abgesehen von den Herstellungskosten noch Entsorgungskosten anfallen für ein nicht verkaufbares Formteil. Daher wird das Formteil während einer sogenannten Sicherheitszeit, die eher grosszügig bemessen ist, länger im Formwerkzeug gelassen als notwendig. Dadurch verlängern sich die Produktionszeit und die Produktivität des Herstellprozesses nimmt ab.

Der optimale Entformungszeitpunkt ist sehr schwierig festzustellen. Die meisten Spritzgiessmaschinen besitzen eine Steuerung, die nach einer frei wählbaren Kühlzeit den Entformungsvorgang einleitet. Diese Kühlzeit wird vor Fertigungsbeginn eingegeben und bleibt in der Regel während der gesamten Fertigung unverändert. Bei einer Produktionsstörung, einer Unterbrechung sowie bei erhöhten Schwankungen der Verarbeitungsparameter kann sich dies nachteilig auf die Qualität des Formteils auswirken. Bereits eine kleine Variation von Prozessparametern kann die notwendige Kühlzeit ändern. Eine Verschlechterung der Formteilqualität kann sowohl in einer Veränderung des thermischen Haushaltes innerhalb des Formteiles als auch in Schwankungen des Forminnendruckes begründet sein.

Bekannte Methoden befassen sich mit der Bestimmung des Entformungszeitpunktes mittels Druckbestimmungen. In folgenden werden die thermischen Gegebenheiten untersucht.

In der JP 62242512 wird die Temperatur des Werkzeuges unter Druck gemessen und mit einem Sollwert verglichen. Die so ermittelte Temperaturdifferenz wird mit einer Konstanten multipliziert, wodurch eine Zeitkorrektur errechnet wird, während der das Formteil länger auskühlen soll als standardmässig vorgesehen ist.

In der US 5411686 wird ein Verfahren genannt, das den Spritzgiessprozess dadurch verbessern soll, indem die Werkzeugtemperatur und die Schmelzentemperatur im Einspritzkanal gemessen werden zum Regulieren der Kühlwassertemperatur sowie der Heizleistung der Schmelze, bis die gemessenen Temperaturen Standartwerte erreicht haben.

**Darstellung der Erfindung**

Aufgabe der vorliegenden Erfindung ist es, ein Verfahren anzugeben, das den optimalen Entformungszeitpunkt von Formteilen in Formwerkzeugen mittels Temperaturmessungen bestimmt. Dieser optimale Zeitpunkt soll, ungeachtet Varianzen in den Prozessparametern, der jeweils frühest mögliche Zeitpunkt der Entformung sein, der die erforderliche Formteilstabilität und die Masshaltigkeit eines Formteils sowie andere Formteileigenschaften gewährleistet. Zudem soll eine Steuerung angegeben werden, mittels welcher das angegebene Verfahren durchgeführt werden kann.

Die Aufgabe wird gelöst durch die Kennzeichen des unabhängigen Patentanspruchs.

Das erfindungsgemässe Verfahren besteht aus den folgenden Schritten: Vorerst wird an mindestens einer Stelle am Formteil auf Grund der dortigen Wanddicke und Geometrie und auf Grund der Materialparameter des Thermoplastes sowie des Werkzeugmaterials und den Verarbeitungsparametern eine Entformungstemperatur festgelegt. Diese Entformungstemperatur entspricht der Temperatur, welche zum optimalen Entformungszeitpunkt an dieser Stelle, gemittelt über die Wanddicke des Formteils, vorherrscht. Während dem Einspritzen beim Spritzgiessvorgang wird die Werkzeugwandtemperatur an der entsprechenden Stelle des Formteils gemessen. Aus dem gemessenen Temperatursprung während dem Einspritzen beim Spritzgiessvorgang wird zu Beginn der Abkühlung berechnet, zu welchem Zeitpunkt die Entformungstemperatur erreicht ist. Sobald dieser Zeitpunkt eintritt, wird ein Signal erzeugt, welches die Entformung einleitet. Eine erfindungsgemässe Steuerung kann das hier beschriebene Verfahren ausführen.

## Kurze Beschreibung der Zeichnungen

Im Folgenden wird die Erfindung unter Beizug der Zeichnungen näher erklärt. Es zeigen

Fig. 1 Eine schematische Darstellung eines Aufbaus eines Formwerkzeugs zur Herstellung von Formteilen;

Fig. 2 Eine grafische schematische Darstellung einer ge- messenen Wandtemperatur;

Fig. 3 Eine grafische schematische Darstellung von Tempe- raturverläufen im Querschnitt des Formteils zu ver- schiedenen Zeiten;

Fig. 4 Eine grafische schematische Darstellung des Ver- laufs einer berechneten Massetemperatur.

## Wege zur Ausführung der Erfindung

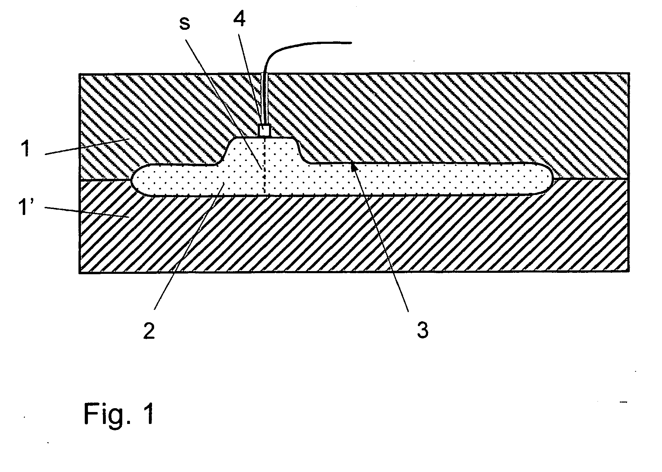

Die Fig. 1 zeigt zwei Werkzeugteile 1, 1' eines Spritzgiesswerkzeuges mit einer inneren Kontur der Werkzeuginnenwand 3, wobei diese kontur eine Kavität 2 definiert, welche der Form eines herzustellenden Formteils entspricht. Beim Spritzgiessen füllt der amorphe oder teilkristalline Thermoplast diese Kavität 2 bis an die Kontur der Werkzeuginnenwand 3 aus und erstarrt anschliessend langsam. Um die Abkühlung zu beschleunigen, werden die Werkzeugteile 1, 1' gekühlt. Während der Abkühlung im Formteil 2 wird die Wärme langsam vom Zentrum des Formteils an die Aussenwand, also an die Werkzeuginnenwand 3, geleitet. Die erforderliche Auskühlzeit nimmt demnach mit der Wanddicke s des Formteils zu. Die wärmsten Stellen befinden sich befinden sich jeweils in den Zentren von lokalen Verdickungen.

Für das erfindungsgemässe Verfahren wird während dem Einspritzen des Thermoplastes in die Kavität an einer geeigneten Stelle an der Werkzeuginnenwand 3 die Temperatur mittels eines dafür angebrachten Temperatursensors 4 gemessen. Dazu wird als Temperatursensor 4 ein Werkzeugwandtemperatur-Sensor verwendet, der eine sehr schnelle Ansprechzeit aufweist, vorzugsweise im Bereich von Millisekunden. Geeignet sind beispielsweise Sensoren von der Firma Kistler mit der Bezeichnung 6190, 6192, 6193 und 6194. Die Montagestelle des Temperatursensors 4 sollte an einer Stelle gewählt sein, an der die langsamste Abkühlung des Formteils 2 zu erwarten ist. Es können auch mehrere Temperatursensoren 4 an verschiedenen Stellen der Kontur der Werkzeuginnenwand 3 angebracht sein.

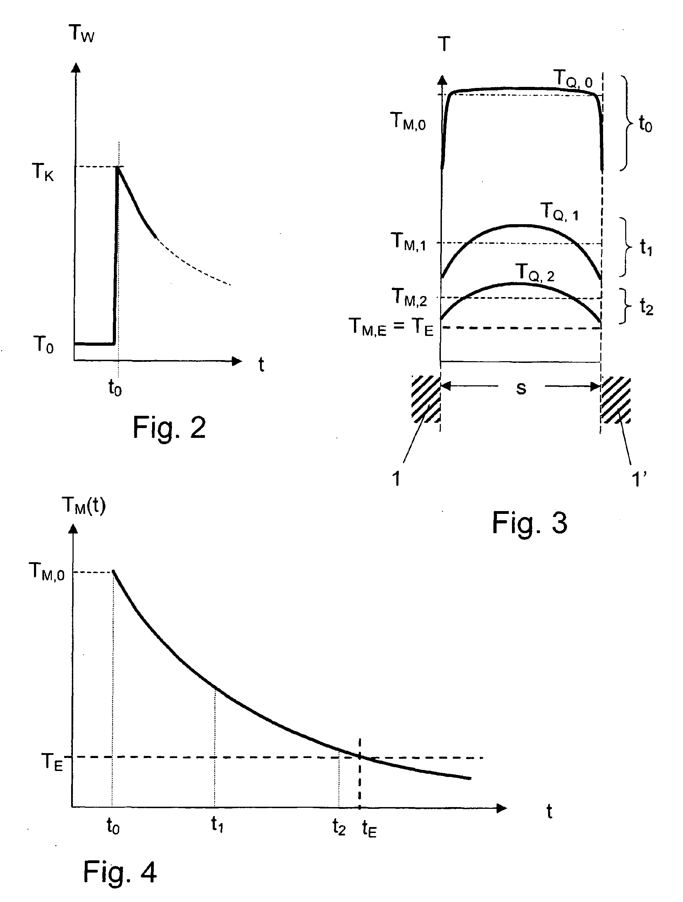

Der Temperatursensor 4 misst die Wandtemperatur $T_W$ an der Messstelle während der Einspritzung. Fig. 2 zeigt einen schematischen Verlauf einer gemessenen Temperaturkurve im Zeitraum der Einspritzung $t_0$. Sobald der Thermoplast die Stelle des Temperatursensors 4 erreicht hat, steigt die gemessene Wandtemperatur $T_W$ sprunghaft von der gekühlten Wandtemperatur $T_0$ auf die Kontakttemperatur $T_K$ an. Danach fällt diese Wandtemperatur durch die Kühlung im Werkzeug wieder langsam ab. Der gemessene Temperatursprung wird für die weitere Berechnung des Entformungszeitpunktes $t_E$ verwendet. Für diese Berechnung sind ferner Materialdaten des Werkzeuges und Materialdaten des Thermoplastes notwendig.

Von den beiden Werkstoffen muss jeweils die Wärmeeindringfähigkeit $b_W$ des Werkzeugmaterials und $b_M$ des eingespritzten Thermoplastes bekannt sein. Eine Wärmeeindringfähigkeit b errechnet sich aus der Wurzel des Produkts der drei Faktoren Wärmeleitfähigkeit $\lambda$, Dichte $\rho$ und Wärmeleitfähigkeit $\lambda$, Dichte $\rho$ und spezifische Wärmekapazität Cp. Auf Grund der Formel

$$T_K = (T_{M,0} \cdot b_M + T_0 \cdot b_W) / (b_M + b_W)$$

lässt sich die einzige Unbekannte $T_{M,0}$, die Massetemperatur des Thermoplastes, zum Zeitpunkt der Einspritzung $t_0$ bestimmen.

Die Definition der Massetemperatur $T_M$ des Thermoplastes lässt sich mit Hilfe der Fig. 3 beschreiben. Im Formteil 2 zwischen den Werkzeugteilen 1 und 1' sind die Querschnittstemperaturen $T_{Q,0}$, $T_{Q,1}$ und $T_{Q,2}$ als Funktionen des Querschnittverlaufs der Wanddicke s zu verschiedenen Zeiten $t_0$, $t_1$ und $t_2$ angegeben. Die über den Querschnitt s gemittelten Temperaturen dieser Verläufe $T_{Q,0}$, $T_{Q,1}$ und $T_{Q,2}$ sind als Massetemperaturen $T_{M,0}$, $T_{M,1}$ und $T_{M,2}$ angegeben zu den jeweiligen Zeiten $t_0$, $t_1$ und $t_2$.

Aus der ermittelten Massetemperatur des Thermoplastes zur Zeit der Einspritzung $T_{M,0}$ lässt sich in einem weiteren Schritt die notwendige Abkühlzeit und somit der optimale Entformungszeitpunkt $t_E$ bestimmen. Die dafür benötigten Materialdaten umfassen zusätzlich zur bereits erforderlichen Wärmeeindringfähigkeit b und der Wanddicke s die Temperaturleitfähigkeit a des Thermoplastes. Diese Temperaturleitfähigkeit a lässt sich aus dem Quotienten ermitteln, welcher gebildet wird durch die Wärmeleitung $\lambda$ dividiert durch das Produkt der Dichte $\rho$ mit der spezifischen Wärmekapazität $C_p$.

Die berechnete Abkühlung der Massetemperatur $T_M$ im zeitlichen Verlauf ist in schematischer Darstellung in der Fig. 4 dargestellt. Die Massetemperatur $T_M$ kühlt sich stetig ab und fällt schliesslich auf den Wert der Entformungstemperatur $T_E$. Diese Abkühlkurve lässt sich mit bewährten Formeln rechnerisch ermitteln. Der Entformungszeitpunkt $t_E$ ist erreicht, sobald die Massetemperatur $T_M$ nicht mehr grösser ist als die Entformungstemperatur $T_E$.

Erfindungsgemäss kann das beschriebene Verfahren durch eine Steuerung ausgeführt werden. Vorzugsweise ist diese Steuerung in die Prozesssteuerung des Spritzgussverfahrens integriert. Diese Steuerung verfügt vorzugsweise über eine Datenbank, in der die erforderlichen Materialparameter von einer Vielzahl von möglichen Thermoplasten sowie von Werkzeugmaterialien bereits gespeichert sind. Selbstverständlich lässt sich diese Datenbank durch den Benutzer auch erweitern. Unter Angabe der Wanddicke und allenfalls weiterer Prozessparameter lässt sich auch die Entformungstemperatur $T_E$ bestimmen.

Zunächst wird eine geeignete Messstelle am Werkzeug ausgesucht, an welcher ein Temperatursensor (4) angebracht wird. Dabei wird eine Stelle ausgesucht, bei der die langsamste Abkühlung zu erwarten ist. Im Zweifelsfall können an mehreren Messstellen Temperatursensoren (4) angebracht werden. Wichtig ist, dass diese Temperatursensoren (4) eine sehr schnelle Ansprechzeit haben.

Bevor mit der Produktion der Formteile begonnen wird, werden die Materialdaten sowie die Wanddicke s in die Steuerung eingegeben und die Entformungstemperatur $T_E$ bestimmt beziehungsweise festgelegt.

Das erfindungsgemässe Verfahren misst nun bei jedem Produktionszyklus den Temperaturanstieg an oder in der Kavitätenwand während der Einspritzung des Thermoplastes $T_0$, $T_K$ in das Werkzeug an einer repräsentativen Stelle an oder in der Kavitätswand und berechnet daraufhin unmittelbar, unter Verwendung der eingegebenen Materialdaten ($b_M$, $b_W$, a, $T_E$) und der Wanddicke s, den erforderlichen Entformungszeitpunkt $t_E$. Sobald dieser Entformungszeitpunkt $t_E$ eingetreten ist, wird ein Signal zur Einleitung der Entformung erzeugt.

Der Vorteil dieses Verfahrens besteht darin, dass, unabhängig von Prozessstörungen und Unterbrüchen, das Formteil nicht unnötig lange im Werkzeug weilt und dadurch die Produktivität der Anlage reduziert. Andererseits besteht nicht die Gefahr, dass das Formteil durch eine zu kurze Auskühlzeit Qualitätseinbussen erleidet. Da die erforderliche Abkühlzeit bei jeden Zyklus von neuem bestimmt wird, werden sowohl langsamen und geringen Änderungen, beispielsweise Änderungen der Raumtemperatur, als auch plötzlichen und massiven Änderungen, beispielsweise verursacht durch eine Prozessstörung, stets Rechnung getragen.

**Bezugszeichenliste**

| | |
|---|---|
| s | Wanddicke des Formteils bei der Messstelle |
| t | Zeitlicher Verlauf |
| $t_0$ | Zeitpunkt des Kontaktes der Einspritzmasse an der Messstelle |
| $t_1$, $t_2$ | Zeitpunkte während der Abkühlphase |
| $t_E$ | Entformungszeitpunkt |
| T | Temperatur |
| $T_W(t)$ | gemessene Wandtemperatur an der Messstelle wäh- rend der Einspritzung |
| $T_0$ | Wandtemperatur unmittelbar vor dem Kontakt der Einspritzmasse an der Messstelle |
| $T_K$ | Wandtemperatur unmittelbar nach dem Kontakt mit der Einspritzmasse |
| $T_{Q,t0}$, $T_{Q,t1}$, $T_{Q,t2}$ | Temperaturverläufe im Querschnitt des Formteils zu den Zeiten $t_0$, $t_1$ und $t_2$ |
| $T_{M,0}$, $T_{M,1}$, $T_{M,2}$, $T_{M,E}$ | Massetemperaturen: Mittlere Querschnittstempera- turen, also Mittelwerte der Temperaturverläufe im Querschnitt des Formteils zu den Zeiten $t_0$, $t_1$, $t_2$ und $t_E$ |
| $T_M(t)$ | Verlauf der Massetemperatur über die Zeit |
| $T_E$ | Entformungstemperatur: Maximal zugelassene mitt- lere Querschnittstemperatur des Thermoplastes bei der Entformung |
| b, $b_W$, $b_M$ | Wärmeeindringfähigkeit des Werkzeuges resp. der Einspritzmasse |
| a | Temperaturleitfähigkeit des Thermoplastes |
| 1, 1' | Werkzeugteile |
| 2 | Aussparung für Formteil; Formteil |
| 3 | Kontur der Werkzeuginnenwand |
| 4 | Temperatursensor |

**Patentansprüche**

1. Verfahren zum Bestimmen eines Entformungszeitpunktes ($t_E$) eines Spritzgussteiles aus amorphen oder teilkristallinen Thermoplasten zum Einleiten eines Entformungsvorganges aus einem Werkzeug mit einer Werkzeuginnenwand (3), basierend auf mindestens einer Temperaturmessung, **gekennzeichnet durch** die folgenden Schritte,

   a) dass die Wärmeeindringfähigkeiten (b) des Thermoplastes ($b_M$) und des Werkzeugmaterials ($b_W$), die Temperaturleitfähigkeit (a) des Thermoplastes, die Wanddicke (s) an einer geeigneten Messstelle sowie die Entformungstemperatur ($T_E$) des Thermoplastes in geeigneten Form bereitgestellt werden;
   b) dass mit mindestens einem Temperatursensor (4), welcher an der geeigneten Messstelle an der Werkzeuginnenwand (3) angebracht ist, die Wandtemperatur vor der Einspritzung ($T_0$) und die Wandtemperatur unmittelbar nach dem Kontakt mit der Einspritzmasse ($T_K$) gemessen wird;
   c) dass der Entformungszeitpunkt ($t_E$) aus den bereitgestellten und den gemessenen Daten ($b_M$, $b_W$, a, s, $T_E$, $T_0$, $T_K$) ermittelt wird;
   d) und dass ein Signal erzeugt wird, welches die Entformung einleitet.

2. Verfahren gemäss Anspruch 1, **dadurch gekennzeichnet, dass** der Temperatursensor (4) ein schnell ansprechender Werkzeugwandtemperatur-Sensor ist.

3. Verfahren gemäss Anspruch 1 oder 2, **dadurch gekennzeichnet, dass** zwei oder mehr Temperatursensoren (4) verwendet werden.

4. Steuerung, welche das Verfahren gemäss einem der vorhergehenden Ansprüche ausführen kann.

5. Steuerung gemäss Anspruch 4, **dadurch gekennzeichnet, dass** eine Datenbank mit Materialdaten von Thermoplasten und Werkzeugmaterialien integriert ist.

**Claims**

1. A method for determining a demolding time ($t_E$) of an injection molded part made of amorphous or partially crystalline thermoplastics for initiating the demolding process from a mold having an inner mold wall (3) wherein said method is based on at least one temperature measurement, **characterized by** the following steps:

   a) providing the heat permeativities (b) of the thermoplastic ($b_M$) and the mold material ($b_W$), the heat conductivity (a) of the thermoplastic, the wall thickness (s) at a suitable measuring site as well as the demolding temperature ($T_E$) of the thermoplastic in a suitable form:
   b) measuring by means of at least one temperature sensor (4) that is attached at the suitable measuring site at the inner mold wall (3) the wall temperature prior to injection ($T_0$) and the wall temperature immediately after contact with the injection mass ($T_K$);
   c) determining the demolding time ($t_E$) from the provided and measured data ($b_M$, $b_W$, a, s, $T_E$, $T_0$, $T_K$);
   d) generating a signal that initiates the demolding.

2. A method according to claim 1 **characterized in that** the temperature sensor (4) is a fast-activated inner mold wall temperature sensor.

3. A method according to claim 1 or 2 **characterized in that** two or more temperature sensors (4) are used.

4. A control capable of performing the method according to any of the preceding claims.

5. A control according to claim 4 **characterized in that** a data base containing material data of thermoplastics and mold materials is integrated.

**Revendications**

1. Un procédé de détermination un temps de démoulage ($t_E$) d'une pièce moulée par injection fabriquée de matières thermoplastiques amorphes ou partiellement cristallines pour déclencher le processus de démoulage d'un moule ayant une paroi interne de moule (3), procédé basé sur au moins une mesure de température et **caractérisé par** les étapes suivantes dans desquelles:

a) on met à disposition les pérmeativités à chaleur (b) du thermoplastique ($b_M$) et du matériel du moule ($b_W$), la conductibilité de la chaleur (a) du thermoplastique, l'épaisseur de la paroi (s) à un point de mesure approprié ainsi que la température de démoulage ($T_E$) du thermoplastique sous une forme appropriée;

b) on mesure avec au moins un capteur de température (4) placé au point de mesure approprié à la paroi interne du moule (3) la température de la paroi avant injection ($T_0$) et la température de la paroi immédiatement après le contact avec la masse injectée;

c) on détermine le temps de démoulage ($t_E$) des données mises à disposition ou mesurées ($b_M$, $b_W$, a, s, $T_E$, $T_0$, $T_K$);

d) on génère un signal que déclenche le démoulage.

2. Un procédé selon la revendication 1 **caractérisé en ce que** le capteur de température (4) est un capteur de température de la paroi de moule à réponse rapide.

3. Un procédé selon la revendication 1 ou 2 **caractérisé en ce qu'**on utilise deux ou plusieurs capteurs de température (4).

4. Une commande papable de effectuer le procédé selon une des revendications précédentes.

5. Une commande selon la revendication 4 **caractérisé en ce qu'**une banque est intégrée contenant données des matériaux thermoplastiques et des matériaux de moule.

Fig. 1

$T_W$

$T_K$

$T_0$

$t_0$     t

Fig. 2

$T$

$T_{Q,0}$

$T_{M,0}$

$t_0$

$T_{Q,1}$

$T_{M,1}$

$t_1$

$T_{Q,2}$

$T_{M,2}$

$T_{M,E} = T_E$

$t_2$

s

1                 1'

Fig. 3

$T_M(t)$

$T_{M,0}$

$T_E$

$t_0$      $t_1$      $t_2$   $t_E$    t

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 62242512 B
- US 5411686 A